# EUROPÄISCHE PATENTANMELDUNG

(11) **EP 2 225 924 A1**
(43) Veröffentlichungstag der Anmeldung: **08.09.2010**
(21) Anmeldenummer: 10154824.6
(22) Anmeldetag: 26.02.2010
(51) Int. Cl.: A01B 29/04

(54) **Landwirtschaftliches Gerät**

(30) Priorität: 02.03.2009 CH 3312009; 18.05.2009 CH 7972009
(71) Anmelder: Fondation Delinat-Institut, 1966 Ayent (CH); Duvin, Gilles, 33210 Pujols sur Ciron (FR)
(72) Erfinder: Schmidt, Hans-Peter, 1974, Arbaz (CH)
(74) Vertreter: Falk, Urs

(57) **Zusammenfassung**

Ein landwirtschaftliches Gerät zur mechanischen Bearbeitung der Bodenbegrünung umfasst eine Walze (2) mit einer Vielzahl von Klingen (5) und eine Deichsel (3), um die Walze (2) an einen Traktor anzuhängen. Die Klingen (5) sind entweder wellenförmig oder verlaufen schräg zur Drehachse der Walze (2). Der von der Walze (2) auf den Boden ausgeübte Druck wird mit Vorteil hydraulisch erzeugt.

## Beschreibung

Die Erfindung betrifft ein landwirtschaftliches Gerät zur mechanischen Bearbeitung der Bodenbegrünung.

In der Landwirtschaft ist unter dem Namen Rolofaca eine mit stumpfen Messern versehene Walze bekannt. Der Rolofaca wird hauptsächlich im Weinbau zur Bearbeitung der Zwischenbegrünung eingesetzt. Die bekannten Rolofaca sind Einzelgeräte, die in verschiedenen, nicht professionellen Ausführungen eingesetzt werden. Sie bestehen aus einer mit Beton gefüllten Stahltonne, deren Oberfläche mit einer Vielzahl von angeschweissten Klingen versehen ist. Der Rolofaca hat ein sehr hohes Gewicht von typischerweise 400 kg auf 1 m Breite. Der Rolofaca wird an einen Traktor angehängt oder an ein Zugtier angespannt und zwischen den Rebzeilen hindurchgezogen. Dabei wird die Begrünung allein durch das Gewicht des Rolofaca platt gewalzt. Die Klingen des Rolofaca sind stumpf, so dass sie die Gräser nicht abschneiden, sondern nur brechen. Der Rolofaca ist ein sehr schweres Gerät, das von Hand nur schwierig und unter Einsatz von grosser Kraft zu manövrieren ist.

Der Erfindung liegt die Aufgabe zugrunde, die Bearbeitung der Zwischenbegrünung zu verbessern.

Die genannte Aufgabe wird erfindungsgemäss gelöst durch die Merkmale des Anspruchs 1. Vorteilhafte Ausgestaltungen ergeben sich aus den abhängigen Ansprüchen.

Das landwirtschaftliche Gerät zur mechanischen Bearbeitung der Bodenbegrünung umfasst eine mit stumpfen Messern versehene Walze. Das landwirtschaftliche Gerät gemäss der Erfindung basiert auf zwei voneinander unabhängigen technischen Verbesserungen, die die Bearbeitung der Zwischenbegrünung wesentlich erleichtern. Gemäss der ersten Idee wird die Walze in Leichtbauweise ausgeführt und der für die mechanische Bearbeitung des Bodens nötige Druck der Walze hydraulisch erzeugt, so dass ihr Eigengewicht gering ist und sie ohne grossen Kraftaufwand von Hand manövriert werden kann. Gemäss der zweiten Idee sind die Klingen wellenförmig, bevorzugt sinusförmig, ausgebildet, so dass die Walze im Betrieb auf den Klingen abrollt. Somit liegen einerseits immer nur wenige Punkte einer Klinge auf dem Boden auf, was den Bodendruck erhöht, und andererseits verteilt sich der auf den Boden ausgeübte Druck beim Abrollen der Walze gleichmässiger. Alternativ sind auch kurze Klingen möglich, wenn sie schräg zur Drehachse der Walze verlaufen. Diese beiden Verbesserungen können je einzeln angewandt werden, bevorzugt jedoch in Kombination. Zudem wird der Walze mit Vorteil eine Vorlaufrolle vorgeschaltet, die die Gräser umbiegt, was die Wirksamkeit der Walze verbessert.

Die Erfindung wird nachfolgend anhand von Ausführungsbeispielen und anhand der Zeichnung näher erläutert. Es ist für den Fachmann klar, dass verschiedene Modifikationen möglich sind, die im Rahmen seines handwerklichen Könnens liegen.
- Fig. 1: zeigt in seitlicher Ansicht ein erfindungsgemässes landwirtschaftliches Gerät,
- Fig. 2: zeigt das Gerät in perspektivischer Ansicht,
- Fig. 3: zeigt ein Hydraulikschema,
- Fig. 4: zeigt schematisch eine in der Breite veränderbare Walze,
- Fig. 5: zeigt eine Zusatzwalze,
- Fig. 6: zeigt schematisch in Aufsicht eine Walze mit wellenförmigen Klingen,
- Fig. 7: zeigt einen Querschnitt der Walze gemäss Fig. 6,
- Fig. 8: zeigt eine wellenförmige Klinge, und
- Fig. 9: zeigt eine Klinge mit angefaster Kante, und
- Fig. 10, 11: zeigen ein landwirtschaftliches Gerät mit Zusatzwalzen.

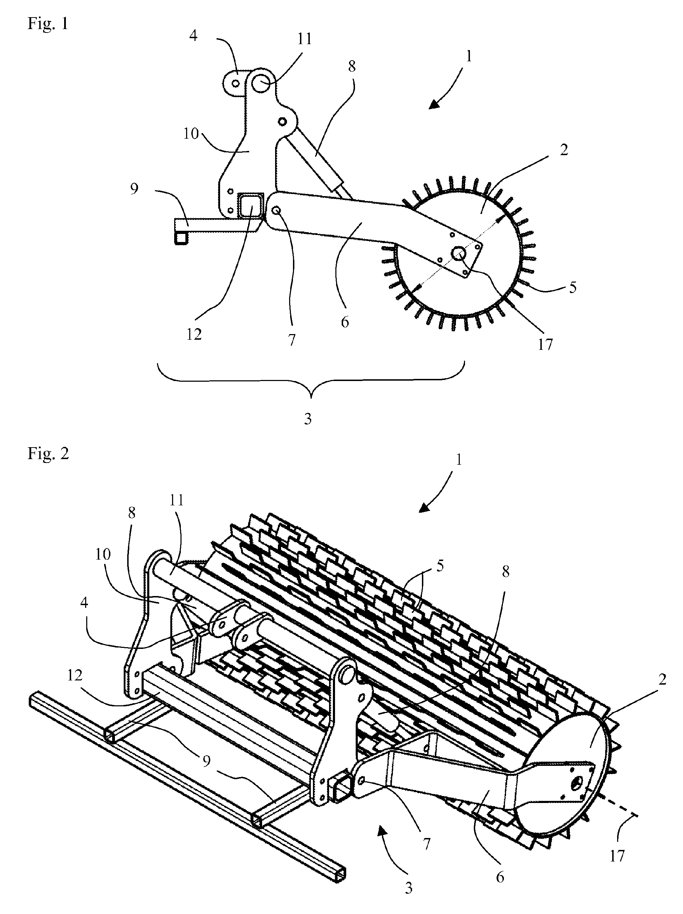

Die erste Verbesserung besteht wie oben beschrieben darin, die Walze in Leichtbauweise zu bauen und den für die Bearbeitung des Bodens nötigen Druck hydraulisch zu erzeugen. Dies wird nun anhand der Fig. 1 bis 5 näher erläutert.

Die Fig. 1 zeigt in seitlicher Ansicht ein erfindungsgemässes landwirtschaftliches Gerät 1. Die Fig. 2 zeigt das Gerät 1 in perspektivischer Darstellung. Das Gerät 1 umfasst eine Walze 2 und eine Deichsel 3 mit einem Kupplungsstück 4, um die Walze 2 an einen Traktor anzuhängen. Die Deichsel 3 kann auch als Anhängevorrichtung oder Ziehvorrichtung bezeichnet werden. Die Oberfläche der Walze 2 ist mit einer Vielzahl von angeschweissten Klingen 5 versehen. Die Klingen 5 sind stumpf, damit sie die Gräser nicht abschneiden, sondern nur brechen. Die Ankopplung des Geräts 1 an den Traktor kann auf übliche Weise erfolgen, nämlich so, dass die Deichsel 3 um eine parallel zum Boden verlaufende Achse drehbar am Traktor angehängt ist, so dass die Walze 2 immer auf dem Boden aufliegt. Die Deichsel 3 ist eine Stahlkonstruktion mit zwei Armen 6, die um eine horizontale Achse 7 drehbar an der Deichsel 3 gelagert sind, und mit mindestens einem Hydraulikzylinder 8, der es ermöglicht, eine einstellbare Kraft auf die Arme 6 auszuüben. Die Walze 2 befindet sich zwischen den beiden Armen 6 und ist an den Armen 6 gelagert, so dass sie auf dem Boden rollt, wenn das Gerät 1 vom Traktor gezogen oder geschoben wird. Das gesamte Gerät 1 lässt sich hydraulisch vom Traktor anheben und entsprechend ohne Bodenberührung zum Einsatzort transportieren.

Wenn das Gerät 1 am Traktor angehängt ist, dann ist der Abstand des Kupplungsstücks 4 vom Boden fest vorgegeben. Die Stahlkonstruktion der Deichsel 3 weist zudem zwei Arme 9 auf, die am Traktor anliegen, um ein allfälliges Drehmoment aufzunehmen. Der Traktor dient auf diese Weise als Widerlager und sorgt mit seinem Gewicht dafür, dass die vom mindestens einen Hydraulikzylinder 8 erzeugte Kraft auf die Arme 6 und somit auf die Walze 2 ausgeübt wird. Der von der Walze 2 auf den Boden ausgeübte Druck kann mittels des mindestens einen Hydraulikzylinders 8 zwischen einem durch das Gewicht der Walze 2 vorgegebenen Minimalwert und einem durch den mindestens einen Hydraulikzylinder 8 vorgegebenen Maximalwert beliebig variiert und an die Gegebenheiten des Bodens und der Begrünung angepasst werden.

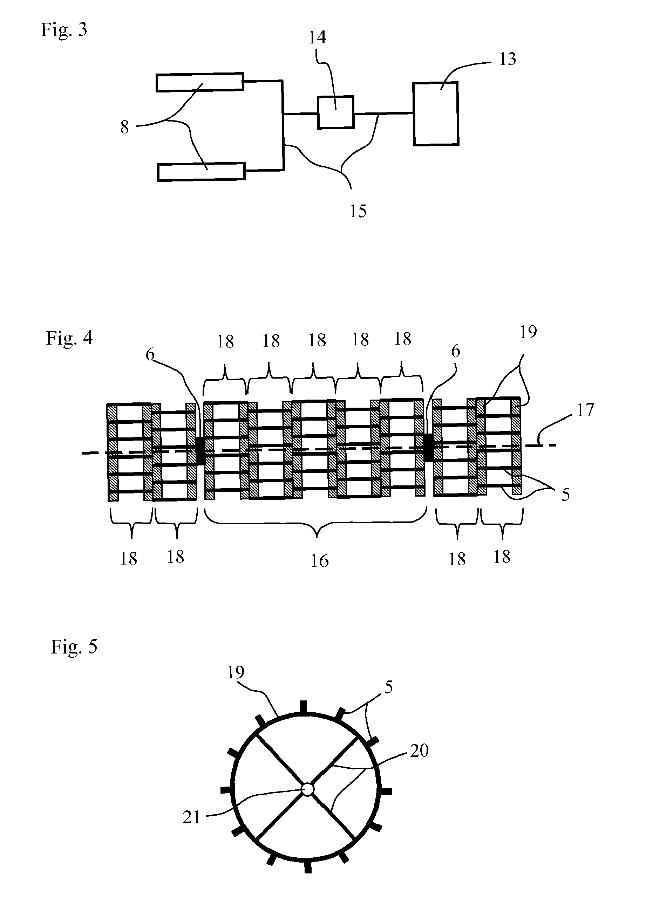

Im Folgenden wird ein bevorzugtes Ausführungsbeispiel mit zwei Hydraulikzylindern 8 beschrieben. Bei diesem Beispiel umfasst die Stahlkonstruktion zwei weitere Arme 10, die im Abstand zueinander angeordnet und mittels zweier Querstangen 11 und 12 fest miteinander verbunden sind. Das Kupplungsstück 4 ist an der oberen Querstange 11 in der Mitte zwischen den beiden Armen 10 befestigt. Die beiden Hydraulikzylinder 8 sind je zwischen einem beweglichen Arm 6 und einem Arm 10 eingebaut und an diesen Armen 6 und 10 drehbar gelagert. Die beiden Hydraulikzylinder 8 werden entweder von einer auf der Deichsel 3 angeordneten Hydraulikanlage 13 (Fig. 3) oder von der Hydraulikanlage des Traktors betrieben. Die Hydraulikanlage umfasst die nötigen Komponenten wie Manometer und Steuerventile, die für einen solchen Betrieb nötig sind. Das Einstellen des Drucks erfolgt in der Regel von Hand, wobei sich der eingestellte Druck an einem Manometer ablesen und kontrollieren lässt. Das Einstellen des Drucks kann aber auch durch eine vorprogrammierte automatische oder teilautomatische Steuerung erfolgen. Mittels der beiden Hydraulikzylinder 8 lässt sich bei diesem Beispiel ein zwischen 0 und 80 bar einstellbarer Druck erzeugen.

Mit Vorteil ist den beiden Hydraulikzylindern 8 wie in der Fig. 3 gezeigt ein Hydraulikspeicher 14, beispielsweise ein Stickstoff-Blasenspeicher, vorgeschaltet, damit im Falle von Bodenunebenheiten verhindert werden kann, dass der Traktor ausgehebelt wird. Der Hydraulikspeicher 14 bewirkt, dass der von der Walze 2 auf den Boden ausgeübte Druck unabhängig von Bodenunebenheiten immer gleich ist. Der Hydraulikspeicher 14 wirkt somit als Stossdämpfer. Sobald der Druck in den Hydraulikzylindern 8 aufgrund einer Bodenunebenheit kurzfristig einen vorbestimmten Wert übersteigt, wird Hydraulikflüssigkeit aus den Hydraulikzylindern 8 in den Hydraulikspeicher 14 gepresst, und die derart gespeicherte Energie wird wieder an die Hydraulikzylinder 8 abgegeben, sobald der Druck in den Hydraulikzylindern 8 wieder unter den vorbestimmten Wert fällt. Das Bezugszeichen 15 bezeichnet die hydraulischen Leitungen, die die Hydraulikzylinder 8, den Hydraulikspeicher 14 und die Hydraulikanlage 13 miteinander verbinden.

Das erfindungsgemässe landwirtschaftliche Gerät 1 ermöglicht es einerseits, den von der Walze 2 ausgeübten Bodendruck an Gegebenheiten des Bodens und der Begrünung anzupassen. Andererseits ist das landwirtschaftliche Gerät 1 bedeutend leichter und entsprechend besser manövrierbar als die bekannten Rolofaca, die statische Maschinen sind, deren extrem schwere, mit Beton gefüllten Stahltonnen allein durch die Schwerkraft die Begrünung walzen.

Es ist möglich, die Walze 2 als geschlossenen Zylinder auszubilden, so dass sie mit Wasser gefüllt werden kann. Auf diese Weise kann der Bodendruck zusätzlich erhöht und/oder die Walze 2 auch eingesetzt werden, ohne sie an eine Hydraulikanlage anschliessen zu müssen.

Das erfindungsgemässe landwirtschaftliche Gerät 1 ist vor allem für den Einsatz im Wein- und Obstbau vorgesehen. Die Fig. 4 zeigt schematisch eine vorteilhafte Ausführung der Walze 2, deren Breite veränderbar ist und damit an verschieden grosse Abstände der Rebzeilen angepasst werden kann. Die Walze 2 besteht aus einer Basiswalze 16, die wie oben beschrieben zwischen den beiden Armen 6 der Deichsel 3 (Fig. 2) angeordnet und um eine Drehachse 17 drehbar ist. Die Drehachse 17 der Basiswalze 16 ist so ausgebildet, dass an ihren Enden jeweils eine oder mehrere Zusatzwalzen 18 angesetzt werden können. Die Oberfläche der Basiswalze 16 und der Zusatzwalzen 18 ist mit den Klingen 5 versehen. Die Klingen 5 der Zusatzwalzen 18 stehen mit Vorteil jeweils über (nicht dargestellt), so dass es zu Überlappungen des Arbeitsbereichs benachbarter Zusatzwalzen 18 kommt. Die Klingen 5 im Bereich der Arme 6 sind entweder so ausgestaltet, dass sie beim Drehen um die Drehachse 17 die Arme 6 nicht berühren, so dass es im Bereich der Arme 6 eine kleine Totzone hat, wo die Begrünung nicht bearbeitet wird, oder die Klingen 5 im Bereich der Arme 6 sind drehbar und federnd angeordnet, so dass sie bei der Berührung mit den Armen 6 eingeklappt und hinter den Armen 6 automatisch wieder ausgeklappt werden.

Eine solche Zusatzwalze 18 besteht zum Beispiel aus zwei im Abstand zueinander angeordneten Felgen 19, die durch die Klingen 5 miteinander verbunden sind. Die Fig. 5 zeigt die Zusatzwalze 18 im Blick auf die Drehachse 17. Die Felgen 19 sind über Speichen 20 mit einer Radnabe 21 verbunden, die die Drehachse 17 bildet. Die Radnabe 21 ist so ausgebildet, dass die Zusatzwalzen 18 zusammengesteckt werden können.

Die Basiswalze 16 kann eine eigenständige Walze oder wie dargestellt aus einzelnen Zusatzwalzen 18 zusammengesetzt sein, wobei die Basiswalze 16 auch im ersten Fall mit Vorteil aus einzelnen Felgen oder einem offenen Zylindermantel besteht, die bzw. der über Speichen mit der Radnabe verbunden ist. Die Oberfläche der Walze 2, die die Klingen 5 aufweist, ist dann also durch Speichen mit der Radnabe verbunden. Durch diese Konstruktion wird es möglich, das Gerät 1 in Leichtbauweise herzustellen, was die Manövrierbarkeit weiter verbessert und den Materialaufwand senkt.

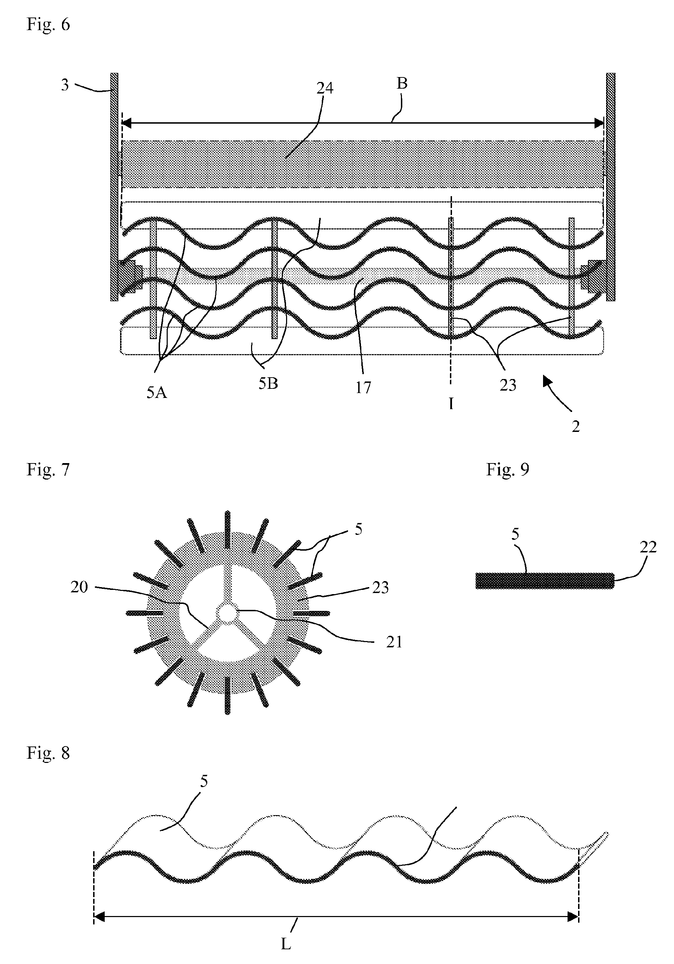

Die zweite Verbesserung besteht darin, die Klingen 5 wellenförmig, bevorzugt sinusförmig, auszubilden. Dies wird nun anhand der Fig. 6 bis 8 näher erläutert. Die in der Fig. 2 dargestellte Walze 2 enthält eine Vielzahl von kurzen, geraden Klingen 5, die in parallelen Reihen à acht oder neun, voneinander durch Leerräume getrennte Klingen angeordnet sind. Eine solche Reihe von acht oder neun geraden Klingen 5 wird nun erfindungsgemäss durch eine wellenförmige Klinge ersetzt. Die Fig. 6 und 7 zeigen schematisch eine Walze 2 mit wellenförmigen Klingen 5 in einer bevorzugten Ausführungsform in einer Art Aufsicht bzw. im Querschnitt entlang der Linie I der Fig. 6. Bei diesem Beispiel hat die Walze 2 eine Breite von B = 120 cm, die Wellenlänge λ der Wellen der Klingen 5 beträgt
λ = B/4 = 30 cm. Die Walze 2 umfasst vier Scheibenfelgen 23, die über Speichen 20 mit der Radnabe 21 verbunden sind. Die Scheibenfelgen 23 sind mit Einschnitten versehen, in die die Klingen 5 eingesetzt sind. Die Klingen 5 und die Scheibenfelgen 23 sind mit Vorteil miteinander verschweisst. Die Länge der L der Klingen 5 entspricht mit Vorteil etwa der Breite B der Walze 2. In der Fig. 6 sind aus Gründen der zeichnerischen Klarheit nur vier Klingen 5A schematisch dargestellt, die entsprechend ihrer Lage auf dem Umfang der Scheibenfelgen 23 schräg zur Zeichenebene verlaufen, und zwei Klingen 5B, die zufällig parallel zur Zeichenebene verlaufen.

Die Fig. 8 zeigt eine einzelne wellenförmige Klinge 5 in perspektivischer Ansicht, wobei ihre auf dem Boden aufliegende Kante 22 mit einer fett ausgezogenen Linie dargestellt ist. Die Kante 22 ist abgerundet oder angefast, da die Klinge 5 eine stumpfe Klinge ist, die die Gräser nicht abschneiden darf. Die Enden der Kante 22 sind mit Vorteil abgerundet, damit dort keine Gräser hängen bleiben und sich auf die Walze 2 aufwickeln. Die Fig. 9 zeigt eine Klinge 5 mit angefaster Kante 22.

Eine wellenförmige Klinge ist eine Klinge, die einzig aus geschwungenen Abschnitten ohne Ecken besteht. Die Wellenform der Klingen 5, bzw. die Wellenform der auf dem Boden aufliegenden Kante 22 der Klingen 5, ist die optimale Form der Klingen 5. Ecken in der Klinge, z.B. Ecken in einer zickzackförmigen Klinge, wie auch die Enden der Klinge 5 enthalten ein gewisses Risiko, dass dort Gräser hängen bleiben und sich auf die Walze 2 aufwickeln. Aus diesem Grund ist es vorteilhaft, wenn auch nicht zwingend, wenn die Klingen 5 nur aus geschwungenen Abschnitten (ohne Ecken) bestehen und sich über die ganze Breite der Walze 2 erstrecken.

Obwohl Ecken und kurze Klingen 5 nicht dem Optimum entsprechen, ist es möglich, eine Walze mit kurzen Klingen 5 zu verwenden, jedoch mit dem Unterschied, dass die Klingen 5 nicht wie in der Fig. 2 dargestellt parallel zur Drehachse der Walze 2, sondern unter einem vorbestimmten Winkel, z.B. einem Winkel von 30° oder 45°, zwar parallel zur Oberfläche der Walze 2, aber schräg zur Drehachse 17 der Walze 2 verlaufen. Mehrere kurze Klingen mit zur Drehachse 17 der Walze 2 schräger Orientierung können zu einer zickzackförmigen Klinge zusammengefügt werden. In diesen Fällen ist es jedoch vorteilhaft, die Ecken und Enden abzurunden. Auch eine solche Walze bietet beim Abrollen eine gleichmässigere Verteilung des auf den Boden ausgeübten Drucks. Die Breite B der Walze 2 kann unterschiedliche Werte annehmen und ist keineswegs auf die Breite B = 120 cm beschränkt, dementsprechend variieren auch die Anzahl und der gegenseitige Abstand der Scheibenfelgen 23.

An der Deichsel 3 ist mit Vorteil eine Vorlaufrolle 24 gelagert, deren Drehachse parallel zur Drehachse 17 der Walze 2 verläuft. Die Vorlaufrolle 24 ist beispielsweise eine zylinderförmige Rolle oder eine zylinderförmige Walze, die ebenfalls, aber nicht zwingend mit stumpfen Klingen versehen ist.

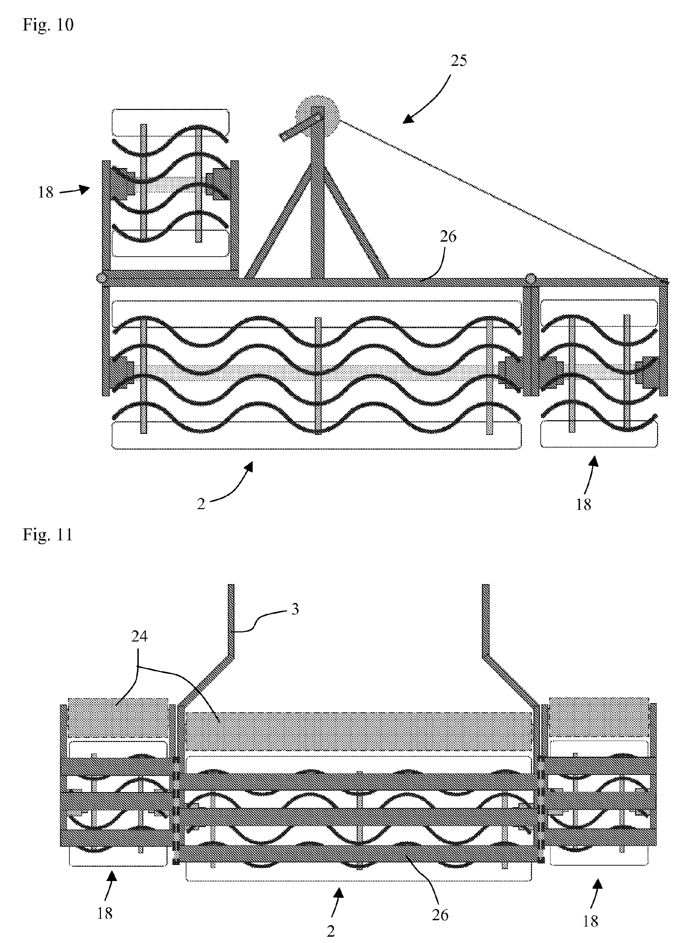

Die Fig. 10 und 11 zeigen in Fahrtrichtung von hinten bzw. in Aufsicht ein auf dieser Konstruktion aufbauendes landwirtschaftliches Gerät, bei dem die Arbeitsbreite durch Zusatzwalzen 18 auf vorgegebene Werte verbreitert werden kann. Die Zusatzwalzen 18 sind aufgebaut wie die Walze 2, jedoch schmaler. Sie sind mittels Scharnieren drehbar an der Walze 2 befestigt, und werden entweder manuell oder mit mechanischen oder hydraulischen Hilfsmitteln wie zum Beispiel einem Seilzug 25 oder Hydraulikmechanismus in die Ruhestellung oder die Arbeitsstellung geschwenkt. In der Ruhestellung lagern die Zusatzwalzen 18 auf einer an der Deichsel 3 befestigten Plattform 26 oberhalb der Walze 2, in der Arbeitsstellung seitlich neben der Walze 2, wobei sie in der Arbeitsstellung mittels eines Feststellmechanismus mit der Walze 2 verriegelt werden. Die Zusatzwalzen 18 enthalten mit Vorteil eine integrierte Vorlaufrolle 24. Im Beispiel sind zwei Zusatzwalzen 18 dargestellt, in der Fig. 10 eine links in der Ruheposition, eine rechts in der Arbeitsposition, in der Fig. 11 beide in der Arbeitsposition. Die Zusatzwalzen 18 können mit weiteren Scharnieren versehen sein, damit weitere Zusatzwalzen angehängt werden können.

Eine Alternative besteht darin, mindestens eine zweite Walze, die eine zweite Deichsel mit zwei um eine Achse drehbaren Armen und eine Vielzahl von wellenförmigen Klingen aufweist, am landwirtschaftlichen Gerät anzuhängen, wobei sich die zweite Walze seitlich links oder rechts der Walze 2 befindet, wobei auf der zweiten Deichsel mindestens ein Hydraulikzylinder befestigt ist, der auf die Arme der zweiten Deichsel einwirkt. Der von der Walze 2 ausgeübte Bodendruck und der von der zweiten Walze ausgeübte Bodendruck werden unabhängig voneinander ausgeübt, so dass sich die einzelnen Walzen individuell an Unebenheiten des Bodens anpassen.

Das landwirtschaftliche Gerät kann zudem bei Bedarf mit mindestens einem Behälter mit einem Verteil- und Dosiermechanismus zum Ausbringen von Feststoffen (wie zum Beispiel Kompost, Biokohle, Samen) oder Flüssigkeiten ausgestattet werden. Diese Behälter sind mit Vorteil an der genannten Plattform bzw. entsprechenden Plattformen der Zusatzwalzen lösbar befestigbar.

## Patentansprüche

1. Landwirtschaftliches Gerät (1) mit einer Walze (2) mit einer Vielzahl von Klingen (5) und einer Deichsel (3), **dadurch gekennzeichnet, dass** die Klingen (5) wellenförmig sind oder dass die Klingen (5) schräg zur Drehachse (17) der Walze (2) verlaufen.

2. Gerät nach Anspruch 1, **dadurch gekennzeichnet, dass** die Klingen (5) sinusförmig sind.

3. Gerät nach Anspruch 1 oder 2, **dadurch gekennzeichnet, dass** sich die Klingen (5) über die gesamte Breite der Walze (2) erstrecken.

4. Gerät nach einem der Ansprüche 1 bis 3, **dadurch gekennzeichnet, dass** die Walze (2) mindestens zwei Scheibenfelgen (23) aufweist und dass die Klingen (5) an den Scheibenfelgen (23) befestigt sind.

5. Gerät nach einem der Ansprüche 1 bis 4, **dadurch gekennzeichnet, dass** in Fahrtrichtung vor der Walze (2) eine Vorlaufrolle (24) angebracht ist.

6. Gerät nach einem der Ansprüche 1 bis 5, **dadurch gekennzeichnet, dass** die Deichsel (3) zwei um eine Achse drehbare Arme (6) aufweist, an denen die Walze (2) drehbar gelagert ist, und dass auf der Deichsel (3) mindestens ein Hydraulikzylinder (8) befestigt ist, der auf die Arme (6) einwirkt.

7. Gerät nach Anspruch 6, **dadurch gekennzeichnet, dass** dem mindestens einen Hydraulikzylinder (8) ein Hydraulikspeicher (14) vorgeschaltet ist.

8. Gerät nach einem der Ansprüche 1 bis 7, **dadurch gekennzeichnet, dass** seitlich an der Walze (2) Zusatzwalzen (18) befestigbar sind.

9. Gerät nach Anspruch 6 oder 7, **dadurch gekennzeichnet, dass** mindestens eine zweite Walze, die eine zweite Deichsel mit zwei um eine Achse drehbaren Armen und eine Vielzahl von wellenförmigen Klingen aufweist, am Gerät angehängt werden kann und dass auf der zweiten Deichsel mindestens ein Hydraulikzylinder befestigt ist, der auf die Arme der zweiten Deichsel einwirkt.

10. Gerät nach einem der Ansprüche 1 bis 9, **dadurch gekennzeichnet, dass** es mit mindestens einem Behälter mit einem Verteil- und Dosiermechanismus zum Ausbringen von Feststoffen oder Flüssigkeiten ausgestattet werden kann.
